Europäisches Patentamt

European Patent Office

Office européen des brevets

(11) Publication number: **0 227 948 B1**

# EUROPEAN PATENT SPECIFICATION

(45) Date of publication of patent specification: **07.04.93**　(51) Int. Cl.⁵: **C08K 5/00**, C08L 23/02,
//(C08K5/00,5:37,5:52)

(21) Application number: **86116304.6**

(22) Date of filing: **25.11.86**

The file contains technical information submitted
after the application was filed and not included in
this specification

(54) **Improved phosphite stabilizer compositions.**

(30) Priority: **29.11.85 US 802894**
**31.10.86 US 925599**

(43) Date of publication of application:
**08.07.87 Bulletin 87/28**

(45) Publication of the grant of the patent:
**07.04.93 Bulletin 93/14**

(84) Designated Contracting States:
**DE FR GB IT NL**

(56) References cited:
**FR-A- 1 294 998**
**GB-A- 2 039 492**
**GB-B- 936 494**
**US-A- 3 558 554**
**US-A- 4 290 941**

(73) Proprietor: **GE SPECIALTY CHEMICALS, INC.**
**Parkersburg Center 5th & Avery Streets**
**Parkersburg, West Virginia 26102(US)**

(72) Inventor: **Horn, William E., Jr.**
**Rt. no 1, Box 491**
**Vincent Ohio 45784(US)**
Inventor: **Ray, Wesley C.**
**5403 - 10th Avenue**
**Vienna West Virginia 26105(US)**
Inventor: **Valdiserri, Leo L.**
**Box 183 - Rt. no 2**
**Little Hocking Ohio 45742(US)**

(74) Representative: **Vossius & Partner**
**Siebertstrasse 4 P.O. Box 86 07 67**
**W-8000 München 86 (DE)**

## Description

This application is a continuation-in-part of application Serial No. 802,894, filed November 29, 1985.

This invention relates to improved stabilizers for polyolefins, and more particularly to stabilizer compositions comprising tris-alkylphenyl phosphites and minor amounts of a dialkyl thiodipropionate. Still more particularly, the invention relates to stabilizer compositions comprising a tris-alkylphenyl phosphite and from 1 to 55 parts by weight, per hundred parts by weight phosphite, of a dialkyl thiodipropionate. These low levels of dialkyl thiodipropionate synergistically enhance the stabilizing effectiveness of the phosphite, affording improved melt-processing stability to polyolefin resins with less deterioration in color.

Tris-alkylphenyl phosphites have long been known for use in stabilizing a variety of resins, and are known to be particularly beneficial for stabilizing polyolefins during melt processing operations. Although these phosphites may be used alone for such purposes, they are often employed in combination with a variety of co-stabilizers such as hindered phenols and the like to provide additional stabilization, as is disclosed for example in U.S. 3,558,554.

Thioester compounds have also been used in combination with phosphites and phosphite-hindered phenol stabilizer compositions to impart long-term heat aging stability. However, U.S. 4,187,212 discloses that thioesters contribute to yellowing, particularly when used in polyolefins and that such combinations should therefore be avoided.

Although the combination of hindered phenols and phosphites is well established for use in polyolefin stabilization, further improvements have long been sought. The addition of further co-stabilizers has been of some benefit, and the use of combinations of particular hindered phenols, as well as the use of alternative phosphite structures, has gained some acceptance in the art. However, in as much as tris-alkylphenyl phosphites are readily prepared and have become widely available commercially in large quantities and at relatively favorable prices, a method for increasing their effectiveness as melt processing stabilizers would be a useful advance in the stabilizing art. Improved stabilizer compositions based on trisalkylphenyl phosphites would increase the range of low-cost melt processing stabilizers available to the resin compounder.

This invention relates to improved stabilizer compositions comprising tris-alkylphenyl phosphites and small amounts of dialkyl thiodipropionates and to polyolefins containing these stabilizer mixtures.

The tris-alkylphenyl phosphites useful in the practice of this invention include tris-monoalkylphenyl phosphites, tris-dialkylphenyl phosphites and tris-trialkylphenyl phosphites, wherein the alkyl groups are $C_1$-$C_{12}$ alkyl radicals. Examples of such phosphites include tris-(2,4-di-t-butylphenyl) phosphite, tris-nonylphenyl phosphite, tris-(2-t-butyl-4-methylphenyl) phosphite, tris-(2,4 di-t-butyl-6-methyl-phenyl) phosphite and the like, as well as mixtures thereof. A great variety of these and analogous tris-alkylphenyl phosphites are well-known and widely available from commercial sources.

The effectiveness of tris-alkylphenyl phosphites as melt processing stabilizers for polyolefins is synergistically enhanced by including a minor but effective amount of a dialkyl thiodipropionate wherein the alkyl portion is a long chain, about $C_8$-$C_{20}$, aliphatic group, such as octyl, decyl, lauryl, tridecyl, myristyl, palmityl, stearyl and arachidyl. Representative examples of such compounds are distearyl thiodipropionate, dipalmityl thiodipropionate, ditridecyl thiodipropionate, dimyristyl thiodipropionate and dilauryl thiodipropionate. Alkyl moieties having about 10 to about 20 carbon atoms are preferred, with $C_{12}$-$C_{18}$ alkyl moieties being particularly preferred. Most preferred are dilauryl thiodipropionate and ditridecyl thiodipropionate. These and other such compounds are known and are readily available from commercial sources, or may be prepared by means known in the art.

The improved stabilizer composition of this invention will comprise from 1 to 55, preferably about 5 to about 45, and more preferably from about 10 to about 40 parts by weight of dialkyl thiodipropionate per hundred parts by weight of the tris-alkylphenyl phosphite compound. At levels within this range, the effectiveness of the phosphite as a melt processing stabilizer, particularly for polyolefins, is enhanced, and improvement in color stability is shown. At levels below this range, little or no improvement is realized, while at greater levels, further improvement in melt stabilization is minimal or not existent at all, while color stability possibly may decrease. This is particularly unexpected due to the fact that the level of thioester normally employed to provide long term heat aging stability to resins generally is 10 to 50 fold greater than the amount needed to provide synergistic enhancement of the stabilizing character of the phosphite.

The stabilizing compositions of this invention are effective in improving the melt processing stability of polyolefins such as polyethylene, polypropylene and the like when compounded therewith in amounts of up to 0.5 wt%, and usually less than 0.1 wt%. Generally, from about 0.01 to about 0.2 wt% are sufficient for the purpose of stabilizing the olefin resins against deterioration during melt processing. Although considerably greater amounts may also be effective, such large amount afford little additional benefit and are

2

EP 0 227 948 B1

therefore not preferred.

Conventional combinations of tris-alkylphenyl phosphites with co-stabilizers such as antioxidants are also known and widely used as polyolefin stabilizers. For example, the combination of tris-alkylphenyl phosphites with a variety of hindered phenols has been disclosed in U.S. patents 4,187,212 and 4,290,941. The addition of 1 to 55 parts by weight dialkyl thiodipropionate per hundred parts by weight of tris-alkylphenyl phosphite may also synergistically improve the effectiveness of other compositions for the stabilization of polyolefins in melt processing operations.

Other co-stabilizers include compounds such as acid neutralizers, UV stabilizers and antioxidants, such as hindered phenolic compounds like, for example, alkyl esters of (dialkyl hydroxyphenyl) propionic acid, and tris(dialkyl hydroxybenzyl) isocyanurates, In the preferred embodiment, at least one hindered phenolic compound is included.

The present invention may also be understood from a consideration of the following illustrative examples.

Examples 1 - 2

Unstabilized polyethylene, obtained as LLDPE GRSN 7042 from Union Carbide Corporation, was compounded with 0.08 parts by weight Weston® W447, tris(2,4-di-t-butylphenyl) phosphite from Borg-Warner Chemicals, Inc., and varying amounts of dilauryl thiodipropionate (DLTDP). All compositions also contained 0.05 parts by weight calcium stearate processing aid per hundred parts by weight polyethylene. Control Composition A-C were also prepared and tested for comparison purposes.

The compositions were first prepared by dry blending the components, then tested for melt-flow stability by carrying out multiple extrusions at 273°C (525°F) (stock temperature), using a l in. single screw extruder having a 24:1 L:D ratio, fitted with a $\frac{1}{4}$ in. rod die. The melt flow properties, measured by a modification of the method of ASTM D 1238, condition 'E' and Yellowness Index were measured. The compositions and results are summarized in Table I.

3

TABLE I

| Ex. No. | 1 | 2 | A | B | C |
|---|---|---|---|---|---|
| **Composition (pbw)** | | | | | |
| U-276 | 0.08 | 0.08 | – | – | 0.03 |
| W-447 | – | – | 0.08 | – | 0.08 |
| DLTDP | 0.0032 | 0.0080 | – | – | – |
| LLDPE | 100 | 100 | 100 | 100 | 100 |
| **Melt Flow:** | | | | | |
| 1st Pass | 3.33 | 3.35 | 3.13 | 3.06 | 3.25 |
| 3rd Pass | 2.60 | 2.85 | 2.03 | 1.80 | 2.78 |
| 5th Pass | 2.34 | 2.45 | 1.42 | 1.30 | 2.33 |
| **Yellow. Index:** | | | | | |
| 1st Pass | 9.83 | 9.75 | 9.79 | 10.02 | 10.66 |
| 5th Pass | 13.67 | 13.20 | 13.69 | 13.96 | 15.02 |
| Delta YI | 3.84 | 3.45 | 3.90 | 3.94 | 4.36 |

Notes:

LLDPE = linear low density polyethylene; the 100 pbw includes .05 wt% calcium stearate processing aid; U-276 = 3(3,5-di-t-butyl-4-hydroxyphenyl) propionic acid, octadecyl ester, a hindered phenol obtained from Borg-Warner Chemicals, Inc.; DLTDP = dilauryl thiodipropionate; Yellowness Index measured by Hunterlab Colormeter.

It will be apparent that although the addition of the phosphite to polyethylene affords improvement in melt stability and color development (compare Control B with Control A), the further addition of a minor amount of DLTDP affords a substantial improvement in melt stability. The conventional combination of phosphite and hindered phenol (Control C) actually provides slightly less effective stabilization and exhibits poorer color than the compositions stabilized with phosphite and thioester according to the practice of this invention.

Examples 3 - 7

Further compositions were prepared using 0.08 pbw W-447 phosphite, 0.03 pbw U-276 stabilizer, an alkyl ester of a (dialkyl hydroxphenyl) propionic acid, an varying levels of DLTDP. The compositions and test results are summarized in Table II.

4

TABLE II

| Ex. No. | 3 | 4 | 5 | 6 | 7 | C | D |
|---|---|---|---|---|---|---|---|
| Compositions (pbw): | | | | | | | |
| U-276 | 0.03 | 0.03 | 0.03 | 0.03 | 0.03 | .03 | .03 |
| W-447 | 0.08 | 0.08 | 0.08 | 0.08 | 0.04 | .08 | - |
| DLTDP | 0.0016 | 0.0032 | 0.0064 | 0.0080 | 0.0024 | - | - |
| W-618 | - | - | - | - | 0.04 | - | - |
| LLDPE | 100 | 100 | 100 | 100 | 100 | 100 | 100 |
| Melt Flow: | | | | | | | |
| 1st Pass | 3.21 | 3.41 | 3.34 | 3.34 | 3.20 | 3.25 | 3.18 |
| 3rd Pass | 2.83 | 2.92 | 2.91 | 2.91 | 2.48 | 2.78 | 2.47 |
| 5th Pass | 2.46 | 2.57 | 2.60 | 2.61 | 2.04 | 2.33 | 2.12 |
| Yellowness: | | | | | | | |
| 1st Pass | 10.26 | 10.01 | 9.89 | 9.74 | 9.90 | 10.66 | 10.78 |
| 5th Pass | 14.39 | 13.67 | 13.09 | 13.09 | 13.70 | 15.02 | 15.37 |
| Delta YI | 4.13 | 3.66 | 3.20 | 3.35 | 3.80 | 4.36 | 5.09 |

Notes: See Table I notes;
W-618 = distearyl pentaerythritol diphosphite stabilizer from Borg-Warner Chemicals, Inc.

It will be apparent from a comparison of Examples 3-7 with Control Example C that the addition of a minor but effective amount of dilauryl thiodipropionate to the conventional polyolefin stabilizer combination of a hindered phenol and a tris-alkylphenyl phosphite significantly both enhances the melt flow stability and reduces color development during melt processing.

Examples 8 - 11

The melt flow and color stability characteristics of the composition of Examples 8-11, consistent with various embodiments of the invention, may be compared with those of the Control Compositions wherein the trialkylphenyl phosphite and the dialkyl thiodipropionate are not both present (Control Examples E-J) and Control Compositions containing both, but wherein the amount of dialkyl thiodipropionate exceeded 55 pbw relative to the phosphite (Control Examples K-O). The data for these examples are indicated below in Table III. The base resin was linear low density polyethylene (LLDPE) (Union Carbide G-7042). All compositions additionally include 500 ppm calcium stearate, and were processed and tested as described for Examples 1-2, except that the ASTM method for melt flow was unmodified.

TABLE III

| Ex. No. | U-276 ppm | W-447 ppm | DLTDP ppm | MELT FLOW, GM/10 MIN First | Third | Fifth | COLOR, YI First | Fifth |
|---|---|---|---|---|---|---|---|---|
| E | 0 | 0 | 0 | 1.47 | 0.76 | 0.49 | 11.92 | 17.10 |
| F | 300 | 0 | 0 | 1.58 | 1.14 | 0.93 | 14.19 | 20.24 |
| G | 0 | 800 | 0 | 1.76 | 0.97 | 0.59 | 12.29 | 16.53 |
| H | 300 | 800 | 0 | 1.69 | 1.20 | 0.96 | 13.80 | 19.20 |
| I | 0 | 0 | 800 | 1.78 | 1.21 | 0.90 | 11.00 | 15.77 |
| J | 300 | 0 | 800 | 1.78 | 1.42 | 1.14 | 10.96 | 15.40 |
| 8 | 300 | 784 | 16 | 1.79 | 1.34 | 0.95 | 12.16 | 16.41 |
| 9 | 300 | 720 | 80 | 1.86 | 1.47 | 1.12 | 11.59 | 15.99 |
| 10 | 300 | 700 | 100 | 1.83 | 1.54 | 1.20 | 11.62 | 15.32 |
| 11 | 300 | 600 | 200 | 1.83 | 1.46 | 1.30 | 11.43 | 13.24 |
| K | 300 | 500 | 300 | 1.81 | 1.66 | 1.10 | 11.47 | 16.12 |
| L | 300 | 400 | 400 | 1.80 | 1.48 | 1.09 | 11.31 | 15.42 |
| M | 300 | 300 | 500 | 1.81 | 1.46 | 1.19 | 11.71 | 15.31 |
| N | 300 | 200 | 600 | 1.80 | 1.39 | 1.06 | 10.89 | 16.13 |
| O | 300 | 100 | 700 | 1.77 | 1.35 | 1.10 | 11.36 | 16.18 |

Examples 9 - 12

Different dialkyl thiodipropionates were incorporated at the same level into the same LLDPE as Examples 8-11, along with 500 ppm calcium stearate, 300 ppm U-276 and 560 ppm W-447 and processed and tested as described for Examples 1-2, except that seven extrusions were performed. These compositions may be compared against a Control Composition wherein U-276, W-447 and dialkyl thiodipropionate were absent (Control Example P). The data for these examples are indicated below in Table IV.

6

## TABLE IV

| Ex. No. | P | 9 | 10 | 11 | 12 |
|---|---|---|---|---|---|
| U-276 ppm | 0 | 300 | 300 | 300 | 300 |
| W-447 ppm | 0 | 560 | 560 | 560 | 560 |
| Thiosynergist | --- | DLTDP | DTDTDP | DMTDP | DSTDP |
| Amount ppm | 0 | 240 | 240 | 240 | 240 |
| Melt Flow, g/10 min | | | | | |
| First | 1.37 | 1.70 | 1.76 | 1.71 | 1.69 |
| Third | 0.83 | 1.33 | 1.44 | 1.29 | 1.11 |
| Fifth | 0.51 | 1.01 | 1.00 | 0.96 | 0.78 |
| Seventh | 0.34 | 0.82 | 0.81 | 0.70 | 0.59 |

The dialkyl thiodipropionates were:

The dialkyl thiodipropionates were:

| Dialkyl Thiodipropionate | Abbreviation |
|---|---|
| dilauryl thiodipropionate | DLTDP |
| ditridecyl thiodipropionate | DTDTDP |
| dimyristyl thiodipropionate | DMTDP |
| distearyl thiodipropionate | DSTDP |

Examples 13-19

Compositions were made to demonstrate the use of different antioxidants. The compositions included the same LLDPE as Examples 9-12 and included 500 ppm calcium stearate. These compositions were processed and tested as in Examples 9-12. The antioxidants were U-276, GR-3114, tris(3,5-di-t-butyl-4-

7

hydroxybenzyl)isocyanurate, available from the B. F. Goodrich Corporation, and Irganox® 1010 (I-1010), tetrakis [3-(4-hydroxy-3,5-di-t-butylphenyl)propanoyloxy] methane, available from the Ciba- Geigy Corporation. The LLDPE without antioxidant, phosphite or thio-synergist was also tested (Control Example Q). The data for these examples are indicated below in Table V.

TABLE V

| Ex. No. | 13 | 14 | 15 | 16 | 17 | 18 | 19 | Q |
|---|---|---|---|---|---|---|---|---|
| Antioxidant | U-276 | GR-3114 | I-1010 | GR-3114 | U-276 | GR-3114 | I-1010 | None |
| Amount ppm | 300 | 300 | 300 | 300 | 300 | 300 | 300 | - |
| W-447 ppm | 560 | 560 | 560 | 680 | 680 | 680 | 680 | None |
| Thio-synergist | DLTDP | DLTDP | DLTDP | DTDTDP | DTDTDP | DSTDP | DSTDP | None |
| Amount ppm | 240 | 240 | 240 | 120 | 120 | 120 | 120 | - |
| Melt Flow, g/10 min | | | | | | | | |
| First | 1.70 | 1.87 | 1.80 | 1.88 | 1.72 | 1.86 | 1.74 | 1.46 |
| Third | 1.33 | 1.57 | 1.49 | 1.64 | 1.41 | 1.54 | 1.50 | 0.70 |
| Fifth | 1.01 | 1.36 | 1.21 | 1.35 | 1.13 | 1.16 | 1.24 | 0.37 |
| Seventh | 0.82 | 1.14 | 1.05 | - | - | - | - | - |

8

The instant invention will thus be seen to be an improved stabilizer composition comprising a trisalkylphenyl phosphite and from 1 to 55 pbw, preferably from 5-45 pbw, and more preferably 10-40 pbw of a dialkyl thiodipropionate, per hundred pbw of phosphite, and a polyolefin composition which includes that stabilizer composition.

It will be understood that various changes and modifications may be made in the embodiment outlined above without departing from the spirit of the invention, which includes all equivalents and modifications thereof, and is limited only by the following claims.

**Claims**

1. A stabilizing composition for polyolefins comprising a tris-alkylphenyl phosphite and from 1 to 55 pbw of a dialkyl thiodipropionate, per 100 pbw phosphite.

2. The composition of Claim 1 wherein said tris-alkylphenyl phosphite is a tris-dialkylphenyl phosphite.

3. The composition of Claim 1 wherein said tris-alkylphenyl phosphite is tris-(2,4-di-t-butylphenyl) phosphite.

4. The composition of Claim 1 wherein each alkyl moiety of said dialkyl thiodipropionate has 10 to 20 carbon atoms.

5. The composition of Claim 4 wherein said alkyl moiety is selected from the group consisting of $C_{12}$ to $C_{18}$ alkyl moieties.

6. The composition of Claim 5 wherein said dialkyl thiodipropionate is selected from the group consisting of dilauryl and ditridecyl thiodipropionates.

7. The composition of Claim 1 comprising tris-(2,4-d-t-butylphenyl) phosphite and from 5 to 45 pbw of a dialkyl thiodipropionate, per 100 pbw phosphite

8. The composition of Claim 1 further comprising a hindered phenolic compound.

9. The composition of Claim 8 wherein said hindered phenolic compound is an alkyl ester of a (dialkyl hydroxyphenyl) propionic acid.

10. The composition of Claim 9 wherein said hindered phenolic compound is 3(3,5-di-t-butyl-4-hydroxyphenyl) propionic acid, octadecyl ester.

11. A polyolefin composition comprising a polyolefin and a stabilizer mixture comprising a tris-alkylphenyl phosphite and from 1-55 pbw dialkyl thiodipropionate, per 100 pbw phosphite.

12. The composition of Claim 11 wherein said tris-alkylphenyl phosphite is a tris-dialkylphenyl phosphite.

13. The composition of Claim 12 wherein said tris-alkylphenyl phosphite is tris-(2,4-di-t-butylphenyl) phosphite.

14. The composition of Claim 11 wherein said dialkyl thiodipropionate is dilauryl thiodipropionate.

15. The composition of Claim 11, further comprising a hindered phenolic compound.

16. The composition of Claim 15 wherein said hindered phenolic antioxidant is an alkyl ester of a (dialkyl hydroxyphenol) propionic acid.

17. The composition of Claim 16 wherein said hindered phenolic antioxidant is 3(3,5-di-t-butyl-4-hydroxyphenyl) propionic acid, octadecyl ester.

9

**Patentansprüche**

1. Stabilisator-Zusammensetzung für Polyolefine enthaltend ein Tris-alkylphenylphosphit und 1 bis 55 Gewichtsteile eines Dialkylthiodipropionat pro 100 Gewichtsteile Phosphit.

2. Zusammensetzung nach Anspruch 1, worin das Tris-alkylphenylphosphit ein Tris-dialkylphenylphosphit ist.

3. Zusammensetzung nach Anspruch 1, worin das Tris-alkylphenylphosphit Tris-(2,4-di-t-butylphenyl)-phosphit ist.

4. Zusammensetzung nach Anspruch 1, worin jeder Alkylanteil des Dialkylthiodipropionats 10 bis 20 Kohlenstoffatome aufweist.

5. Zusammensetzung nach Anspruch 4, worin der Alkylanteil ausgewählt ist aus der Gruppe bestehend aus $C_{12}$ bis $C_{18}$ Alkylanteilen.

6. Zusammensetzung nach Anspruch 5, worin das Dialkylthiodipropionat ausgewählt ist aus der Gruppe bestehend aus Dilauryl- und Ditridecylthiodipropionaten.

7. Zusammensetzung nach Anspruch 1, enthaltend Tris-(2,4-d-t-butylphenyl)phosphit und 5 bis 45 Gewichtsteile eines Dialkylthiodipropionats pro 100 Gewichtsteile Phosphit.

8. Zusammensetzung nach Anspruch 1, die eine gehinderte phenolische Verbindung enthält.

9. Zusammensetzung nach Anspruch 8, worin die gehinderte phenolische Verbindung ein Alkylester einer (Dialkylhydroxyphenyl)-propionsäure ist.

10. Zusammensetzung nach Anspruch 9, worin die gehinderte phenolische Verbindung 3(3,5-Di-t-butyl-4-hydroxyphenyl)propionsaureoktadecylester ist.

11. Polyolefin-Zusammensetzung enthaltend ein Polyolefin und eine Stabilisator-Mischung, die ein Tris-alkylphenylphosphit und 1 bis 55 Gewichtsteile Dialkylthiodipropionat pro 100 Gewichtsteile Phosphit enthält.

12. Zusammensetzung nach Anspruch 11, worin das Tris-alkylphenylphosphit ein Tris-dialkylphenylphosphit ist.

13. Zusammensetzung nach Anspruch 12, worin das Tris-alkylphenylphosphit Tris-(2,4-Di-t-butylphenyl)-phosphit ist.

14. Zusammensetzung nach Anspruch 11, worin das Dialkylthiodipropionat Dilaurylthiodipropionat ist.

15. Zusammensetzung nach Anspruch 11, die weiterhin eine gehinderte phenolische Verbindung enthält.

16. Zusammensetzung nach Anspruch 15, worin das gehinderte phenolische Antioxidans ein Alkylester einer (Dialkylhydroxyphenol)-propionsäure ist.

17. Zusammensetzung nach Anspruch 16, worin das gehinderte phenolische Antioxidans 3(3,5-Di-t-butyl-4-hydroxyphenyl)propionsäureoktadecylester ist.

**Revendications**

1. Composition stabilisante pour polyoléfines, comprenant un phosphite de tri(alkylphényle) et de 1 à 55 parties en poids d'un thiodipropionate de dialkyle pour 100 parties en poids de phosphite.

2. Composition selon la revendication 1, dans laquelle ledit phosphite de tri(alkylphényle) est un phosphite de tri(dialkylphényle).

EP 0 227 948 B1

**3.** Composition selon la revendication 1, dans laquelle ledit phosphite de tri(alkylphényle) est le phosphite de tri(2,4-di-t-butylphényle).

**4.** Composition selon la revendication 1, dans laquelle chaque fragment alkyle dudit thiodipropionate de dialkyle a 10 à 20 atomes de carbone.

**5.** Composition selon la revendication 4, dans laquelle ledit fragment alkyle est choisi parmi les fragments alkyle en $C_{12}$ à $C_{18}$.

**6.** Composition selon la revendication 5, dans laquelle ledit thiodipropionate de dialkyle est choisi parmi le thiodipropionate de dilauryle et le thiodipropionate de ditridécyle.

**7.** Composition selon la revendication 1, comprenant du phosphite de tri(2,4-di-t-butylphényle) et de 5 à 45 parties en poids d'un thiodipropionate de dialkyle pour 100 parties en poids de phosphite.

**8.** Composition selon la revendication 1, renfermant en outre un composé phénolique à empêchement stérique.

**9.** Composition selon la revendication 8, dans laquelle ledit composé phénolique à empêchement stérique est un ester d'alkyle d'un acide (dialkylhydroxyphényl) propionique.

**10.** Composition selon la revendication 9, dans laquelle ledit composé phénolique à empêchement stérique est l'ester octadécylique de l'acide 3-(3,5-di-t-butyl-4-hydroxyphényl)propionique.

**11.** Composition de polyoléfine comprenant une polyoléfine et un mélange stabilisant renfermant un phosphite de tri(alkylphényle) et de 1 à 55 parties en poids d'un thiodipropionate de dialkyle pour 100 parties en poids de phosphite.

**12.** Composition selon la revendication 11, dans laquelle ledit phosphite de tri(alkylphényle) est un phosphite de tri (dialkylphényle).

**13.** Composition selon la revendication 12, dans laquelle ledit phosphite de tri(alkylphényle) est le phosphite de tri(2,4-di-t-butylphényle).

**14.** Composition selon la revendication 11, dans laquelle ledit thiodipropionate de dialkyle est le thiodipropionate de dilauryle.

**15.** Composition selon la revendication 11, renfermant en outre un composé phénolique à empêchement stérique.

**16.** Composition selon la revendication 15, dans laquelle ledit antioxydant phénolique à empêchement stérique est un ester d'alkyle d'un acide (dialkylhydroxyphényl)propionique.

**17.** Composition selon la revendication 16, dans laquelle ledit antioxydant phénolique à empêchement stérique est l'ester octadécylique de l'acide 3-(3,5-di-t-butyl-4-hydroxyphényl)propionique.

11